# FASCICULE DE BREVET EUROPEEN

(11) **EP 3 184 075 B1**
(45) Date de publication et mention de la délivrance du brevet: **20.02.2019**
(21) Numéro de dépôt: 16205714.5
(22) Date de dépôt: 21.12.2016
(51) Int. Cl.: A61C 8/00

(54) **PROCÉDÉ DE FABRICATION D'UN PILIER IMPLANTAIRE ET D'UNE PROTHÈSE DENTAIRE ASSOCIÉE ET PROTHÈSE DENTAIRE OBTENUE PAR UN TEL PROCÉDÉ**
HERSTELLUNGSVERFAHREN EINES ABUTMENTS UND EINER ENTSPRECHENDEN ZAHNPROTHESE, UND DURCH DIESES VERFAHREN ERHALTENE ZAHNPROTHESE
METHOD FOR PRODUCING AN ABUTMENT AND AN ASSOCIATED DENTAL PROSTHESIS AND DENTAL PROSTHESIS OBTAINED BY SUCH A METHOD

(30) Priorité: 22.12.2015 FR 1563108
(43) Date de publication de la demande: 28.06.2017
(73) Titulaire: Mojito, 83570 Cotignac (FR)
(72) Inventeur: Maisonneuve, Robin, 69970 Chaponnay (FR)
(74) Mandataire: Santarelli

(56) Documents cités:
- WO-A2-03/105710
- CN-U- 204 260 854
- US-A1- 2010 021 865

## Description

La présente demande concerne un procédé de fabrication d'une prothèse dentaire ainsi qu'une prothèse dentaire obtenue par le procédé.

En implantologie dentaire, la réalisation des prothèses sur implant se fait via une interface située entre l'implant et la couronne: le pilier dentaire.

Le pilier dentaire (également dit pilier implantaire) a un rôle prépondérant dans la réussite du cas implantaire de par le fait qu'il assure à la fois une transmission des efforts occlusaux et une composante esthétique par la cicatrisation des tissus gingivaux.

Par conséquent, chaque pilier est propre à un implant et une couronne, laquelle est réalisée au cas par cas. Pour que le positionnement du pilier soit bon, il faut conformer précisément une partie basse du pilier en fonction de l'implant, et une partie haute du pilier est conformée en fonction de la couronne qui représente la dent à remplacer.

Pour cela, les piliers peuvent donc être fabriqués selon différents procédés.

Par exemple, ils peuvent être fabriqués selon un procédé standard qui consiste à acheter des piliers de formes génériques sur catalogue puis à les faire retoucher par le prothésiste afin de les conformer aux besoins des secteurs anatomiques concernés.

Selon un autre exemple, ils peuvent être fabriqués selon un procédé personnalisé qui consiste notamment en un usinage classique monobloc à partir d'une galette de matériau, généralement de chrome-cobalt ou de titane ou en une sur-coulée par la technique de la cire perdue sur pilier calcinable. Ce procédé permet d'obtenir des géométries idoines avec les morphologies prothétiques et anatomiques du patient.

Or un tel procédé est long et couteux, principalement du fait que les piliers sont alors réalisés au cas par cas.

Selon encore un autre exemple, il existe une technologie dite « hybride » dans laquelle une partie du pilier destinée à coopérer avec l'implant est réalisée de manière standard, usinée en série, souvent en métal, et une autre partie du pilier, destinée à recevoir la couronne, est personnalisée, réalisée au cas par cas, par usinage, en zircone.

Une telle technologie est avantageuse pour des productions de toutes petites séries dans des laboratoires de prothèses.

Cependant, une telle réalisation du pilier en deux parties peut présenter des difficultés en ce qui concerne leur assemblage l'une à l'autre et requiert généralement un temps de fabrication important.

Le document US 2010/021865 A1 décrit un procédé de fabrication d'un pilier implantaire de prothèse dentaire, le pilier implantaire comportant un insert en partie basse et un corps en partie haute, le procédé comportant une étape de réalisation spécifique du corps en partie haute par impression tridimensionnelle du corps directement sur un insert pré-fabriqué par usinage CNC.

L'objet de la présente demande vise à proposer un procédé amélioré pour la production dans un contexte industriel, pouvant en outre mener à d'autres avantages.

A cet effet, est proposé selon un premier aspect, un procédé de fabrication d'un pilier implantaire de prothèse dentaire, un pilier implantaire comportant un insert en partie basse et un corps en partie haute, le procédé comportant :
- Une étape de réalisation en série d'un insert d'un pilier implantaire comportant une sous-étape d'usinage dans une partie supérieure de l'insert d'une jonction insert-corps ; et
- Une étape de réalisation spécifique d'un corps du pilier implantaire, indépendant de l'insert, comportant une première sous-étape d'impression tridimensionnelle du corps sur un plateau d'impression tridimensionnelle et une deuxième sous-étape d'usinage d'une zone trans-gingivale du corps et, dans une partie inférieure du corps, d'une jonction corps-insert, complémentaire de la jonction insert-corps, la deuxième sous-étape étant réalisée sur ledit plateau d'impression tridimensionnelle.

Malgré les réticences de l'homme du métier à envisager une réalisation de pilier en deux parties, la réalisation du corps par une technologie de fabrication additive s'est avérée particulièrement intéressante pour réaliser facilement et rapidement un pilier en contexte industriel.

Il aurait pu exister, en fait, une appréhension de l'homme du métier à réaliser, sur un même plateau, la fabrication et l'usinage du corps, d'une part pour assurer une meilleure jonction avec un insert et d'autre part pour éviter d'irriter la gencive qui viendra en contact. Cependant, ceci s'est avéré particulièrement avantageux en pratique, dès lors qu'une attention particulière est accordée aux réglages des outils.

Un tel procédé est ainsi particulièrement facile à mettre en oeuvre d'un point de vue industriel ; il est alors possible de traiter d'une manière automatique une pluralité de cas simultanément.

Les termes « jonction corps-insert » et « jonction insert-corps » permettent de désigner ici les parties de l'insert et du corps configurées pour coopérer l'une avec l'autre afin d'assembler le corps et l'insert l'un à l'autre.

Selon un mode de réalisation intéressant, le procédé comporte une sous-étape d'usinage du corps, la sous-étape d'usinage étant réalisée sur le même plateau d'impression tridimensionnelle. Cette étape comporte possiblement une étape de réalisation par usinage de la jonction corps-insert mais peut s'en distinguer par exemple du fait d'un changement d'outil. Dans tous les cas, dans un procédé selon le premier aspect de la présente invention, cette étape d'usinage peut donc être réalisée sur le même plateau que le plateau d'impression 3D, ce qui est un des principaux avantages de ce procédé.

Dans un exemple de mise en oeuvre, le procédé comporte une étape d'assemblage de l'insert avec le corps.

Par exemple, l'étape d'assemblage comporte une étape de soudage d'une interface entre l'insert et le corps. Un soudage permet non seulement d'assurer une meilleure continuité entre corps et insert mais également de garantir un maintien d'une orientation entre le corps et l'insert.

Eventuellement, l'étape d'assemblage de l'insert avec le corps comporte une étape d'emmanchement de la jonction insert-corps de l'insert avec la jonction corps-insert du corps.

Un emmanchement permet par exemple un alignement, un positionnement et un maintien en orientation entre le corps et l'insert qui soient efficaces.

Selon un exemple de mise en oeuvre, le procédé comporte une étape d'alignement du corps par rapport à l'insert.

Eventuellement, l'alignement est réalisé par un simbleau, c'est-à-dire ici un pion de centrage, traversant le corps et l'insert.

Dans un exemple de mise en oeuvre particulièrement intéressant, la première sous-étape de l'étape de réalisation spécifique d'un corps du pilier implantaire comporte une première étape de réalisation par impression tridimensionnelle d'un support, le corps étant ensuite réalisé par impression tridimensionnelle dans un prolongement du support.

De manière générale, au moins une extrémité apicale du corps est reliée au plateau via un support qui assure non seulement la genèse durant l'impression 3D mais aussi le bridage des corps durant l'opération d'usinage de la jonction corps-insert.

Pour cela, la fabrication d'un corps comporte une première étape de synthèse d'un support. Cette première étape de synthèse de support induit donc une soudure du support au plateau.

Et selon un exemple de réalisation particulièrement intéressant le support est formé de baguettes.

Voire, dans un exemple particulier, les baguettes sont réparties en réseau.

Dans le cadre de la présente demande, le terme réseau signifie ici que les différents éléments formant le support, soit par exemple des baguettes, sont répartis sous le corps pour assurer son maintien.

Cette première étape est ensuite suivie d'une étape de synthèse d'un corps, en commençant par son extrémité apicale. La synthèse du corps se fait donc dans un prolongement du support, en l'occurrence par exemple des baguettes.

Dans un exemple de mise en oeuvre, la première sous-étape de l'étape de réalisation spécifique d'un corps du pilier implantaire comporte une étape finale de formation par impression tridimensionnelle de la jonction corps-insert.

Avantageusement, les baguettes sont réparties sous le corps de sorte à éviter tout porte-à-faux. Par exemple, des baguettes sont donc réparties à l'aplomb d'un pourtour du corps. Un tel agencement d'éléments différents formant le support permet ainsi de l'usinage après la synthèse du corps par impression 3D sur le même plateau en garantissant une meilleure tenue du corps par rapport au support de sorte à pouvoir y appliquer les efforts nécessaires à l'usinage.

Ultérieurement, le corps est ensuite détaché de son support. Un support sous forme de baguettes est alors particulièrement commode pour réaliser un tel détachement. Mais de manière générale, tout type de support comportant une géométrie munie d'une amorce de rupture peut également convenir afin de favoriser la séparation par rupture entre le corps et son support.

Par exemple, chaque baguette comporte optionnellement une section rétrécie à son extrémité en jonction avec l'extrémité apicale du corps pour favoriser son détachement par rapport au corps.

Une étape de polissage est ensuite éventuellement nécessaire.

Dans un exemple de mise en oeuvre privilégié, le procédé comporte plusieurs étapes de réalisation spécifique d'un corps du pilier implantaire simultanées configurées pour réaliser une pluralité de corps par impression tridimensionnelle sur le même plateau d'impression tridimensionnelle.

Grâce à un tel procédé, il est ainsi possible de réaliser simultanément une pluralité de corps pouvant être tous différents si nécessaire ; étant entendu que simultanément signifie ici au cours d'une même fournée sur un même plateau.

Est également proposé, selon un deuxième aspect, un procédé de fabrication d'une prothèse dentaire.

Le procédé comporte de préférence une étape de fabrication d'un pilier implantaire de la prothèse dentaire par un procédé comportant tout ou partie des caractéristiques décrites précédemment.

Par exemple, le procédé comporte une étape d'assemblage de l'insert avec un implant dentaire.

Eventuellement, l'étape d'assemblage de l'insert avec un implant dentaire comporte une étape de fixation d'au moins l'insert à l'implant dentaire avec une vis.

Est également proposé, selon un troisième aspect, une prothèse dentaire, obtenue par un procédé de fabrication d'une prothèse dentaire comportant au moins une partie des caractéristiques précitées, la prothèse comportant au moins un pilier implantaire et un implant dentaire, le pilier implantaire comportant un insert, configuré pour raccorder le pilier à l'implant, fabriqué en série, et un corps, configuré pour raccorder le pilier à une couronne, le corps étant fabriqué spécifiquement par impression tridimensionnelle indépendamment de l'insert ; l'insert comportant une partie supérieure pourvue d'une jonction insert-corps et le corps comportant une zone trans-gingivale et une partie inférieure pourvue d'une jonction corps-insert, coopérant avec la jonction insert-corps, et le pilier comportant en outre une soudure à une interface entre le corps et l'insert.

Selon un exemple préféré, la prothèse comporte une vis fixant au moins l'insert à l'implant.

Selon une option intéressante, le pilier comporte un système d'indexation de l'insert par rapport au corps.

Une prothèse, comportant au moins une partie des caractéristiques susmentionnées, obtenue par un procédé tel que décrit précédemment, est ainsi particulièrement robuste, facile et rapide à fabriquer.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
Les figures 1 à 3 montrent un assemblage d'une prothèse dentaire comportant un pilier et un implant selon un premier exemple de réalisation de la présente invention,
Les figures 4 à 6 montrent un assemblage d'une prothèse dentaire comportant un pilier et un implant selon un deuxième exemple de réalisation de la présente invention,
Les figures 7 à 9 montrent un assemblage d'une prothèse dentaire comportant un pilier et un implant selon un troisième exemple de réalisation de la présente invention,
La figure 10 présente une vue en perspective d'un exemple d'indexation entre un insert et un corps,
La figure 11 montre un exemple d'assemblage entre un corps et un insert plan sur plan, sans emmanchement, selon un exemple de réalisation de la présente invention,
La figure 12 présente un plateau de fabrication tridimensionnelle pour la fabrication de corps d'inserts selon un exemple de réalisation de la présente invention, et
La figure 13 montre quatre corps formés sur le plateau de la figure 12 selon un exemple de réalisation de la présente invention.

Les éléments identiques représentés sur les figures précitées sont identifiés par des références numériques identiques.

Une prothèse dentaire 1, dite « implanto-portée », comporte traditionnellement trois éléments principaux : une couronne (non représentée), un pilier 10 et un implant 20.

L'implant 20, fabriqué de manière traditionnelle par usinage se comporte comme une fondation venant prendre ancrage dans l'os. Il s'agit généralement d'un élément monobloc.

Pour être ancré dans l'os, il comporte souvent un pas de vis 21, comme c'est le cas ici, formé sur au moins un secteur inférieur.

Dans son secteur supérieur et hors enfouissement intra-osseux, l'implant 20 est nanti d'une cavité 22 permettant à des éléments complémentaires de venir s'y connecter, ici typiquement un insert 30 du pilier 10. Pour cela, la cavité 22 débouche donc à une extrémité supérieure 26 de l'implant, c'est-à-dire une extrémité libre du secteur supérieur. La cavité 22 permet les fonctions classiques d'une connectique traditionnelle qui sont, notamment, un bridage et une indexation angulaire grâce à des géométries de repositionnement. Pour cela, la cavité 22 comporte par exemple des cannelures 23 (comme c'est le cas ici) ou selon un autre exemple de réalisation elle pourrait comporter une section à six pans.

De plus ici, la cavité 22 comporte un tronçon évasé 27 qui est situé entre les cannelures 23 et l'extrémité supérieure 26.

Dans le présent exemple de réalisation, l'implant 20 comporte en outre un alésage fileté 24. L'alésage fileté 24 est formé à partir d'un fond de la cavité 22. Il est configuré pour recevoir ici une vis 11 fixant au moins l'insert 30 à l'implant 20 comme ceci est décrit ultérieurement.

Autrement dit, l'implant 20 comporte ici successivement son extrémité supérieure 26, le tronçon évasé 27, les cannelures 23 puis l'alésage fileté 24.

Le pilier 10 comporte ici deux parties principales : l'insert 30 et un corps 40.

L'insert 30, préfabriqué, et le corps 40 sont en matériaux métalliques, tel que le titane ou un alliage chrome-cobalt par exemple, ou encore en céramique voire en polymère.

Selon l'invention, l'insert 30 servant à fixer le pilier 10 à l'implant dentaire 20, est réalisé en série par usinage, éventuellement d'une manière uniforme, c'est-à-dire que plusieurs inserts, éventuellement tous identiques sont réalisés.

L'insert 30 est principalement axisymétrique.

En particulier, il comprend ici une partie inférieure 31 et une partie supérieure 32.

La partie inférieure 31 comporte une connectique adaptée à l'implant dentaire 20 et la partie supérieure 32 comporte une connectique adaptée au corps, également appelée jonction insert-corps 33, qui est ici une jonction mâle.

L'insert peut avoir différentes formes et différents profils entre la connectique avec l'implant et la connectique avec le corps. La gamme d'inserts permet ainsi de couvrir les différents cas cliniques rencontrés.

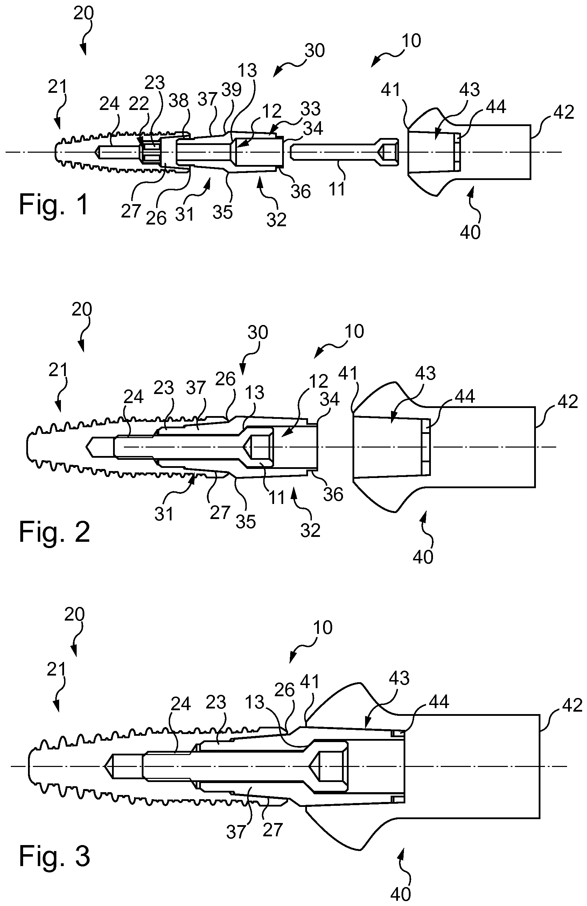

Dans le mode de réalisation des figures 1 à 3, la jonction insert-corps 33 a une forme conique tronquée, c'est-à-dire tronconique. Elle présente de préférence un angle compris entre 4° et 12°. La jonction insert-corps 33 est ainsi analogue à un cône Morse. Elle est configurée pour être emmanchée dans une jonction corps-insert 43 du corps 40, qui est ici une jonction femelle comme ceci est décrit ultérieurement.

La partie supérieure 32 présente ainsi une extrémité 34, qui est une extrémité libre, et une base 35, qui est donc située entre l'extrémité libre 34 et la partie inférieure 31, et du fait de la forme tronconique de la jonction insert-corps 33, l'extrémité libre 34 présente une section moindre qu'une section de la base 35.

L'insert 30 comporte en outre ici un rebord périphérique 39 résultant d'une différence de section entre la base 35 et la partie inférieure 31, la base 35 ayant une section plus grande que la partie inférieure 31.

De plus, la partie supérieure 32 comporte à l'extrémité libre 34 au moins une cannelure 36 permettant un positionnement angulaire particulier entre l'insert et le corps. A cet effet, le corps comporte une jonction corps-insert, qui est ici une jonction femelle, pourvue en son fond d'une forme complémentaire, comme ceci est décrit ultérieurement. En outre, dans ce mode de réalisation, la cannelure 36 est formée sur un pourtour extérieur de la partie supérieure 32.

La partie inférieure 31 est ici configurée pour entrer dans la cavité 22 de l'implant.

La partie inférieure 31 comporte ici principalement deux tronçons.

Un premier tronçon 37 est ici relié à la partie supérieure 32 via la butée 39 et un deuxième tronçon 38 se situe dans le prolongement du premier tronçon 37. Autrement dit, le premier tronçon 37 est ici positionné entre le deuxième tronçon 38 et la partie supérieure 32.

Ici, le premier tronçon a une forme tronconique et le deuxième tronçon a une forme cylindrique à section circulaire.

La forme tronconique du premier tronçon 37 contribue à maintenir l'insert en appui, en butée, dans l'implant, en particulier dans le tronçon évasé 27 de la cavité 22.

Le deuxième tronçon 38 comporte des cannelures, non représenté pour clarifier les dessins, configurées pour coopérer avec les cannelures 23 de la cavité 22 et ainsi positionner angulairement l'insert 30 dans l'implant 20.

Enfin, comme le montre en particulier la figure 1, l'insert comporte un alésage 12 le traversant de part en part.

En particulier, l'alésage 12 comporte une butée 13 configurée pour former un appui à une tête de la vis 11 servant à fixer au moins l'insert à l'implant.

Dans le présent exemple de réalisation la butée 13 est formée par une variation de section de l'alésage 12. Plus précisément ici, la butée 13 est formée par un raccord tronconique entre deux tronçons cylindriques de l'alésage qui ont des sections différentes : un premier tronçon situé vers le corps et destiné à recevoir la tête de vis 11 ayant une section plus grande qu'un deuxième tronçon situé vers l'implant et destiné à recevoir une tige de la vis 11.

Selon l'invention, le corps, adapté de manière individuelle, est formé par une technologie de fabrication additive, par frittage ou fusion de poudre d'une manière individuelle en vue de faire un dispositif sur mesure.

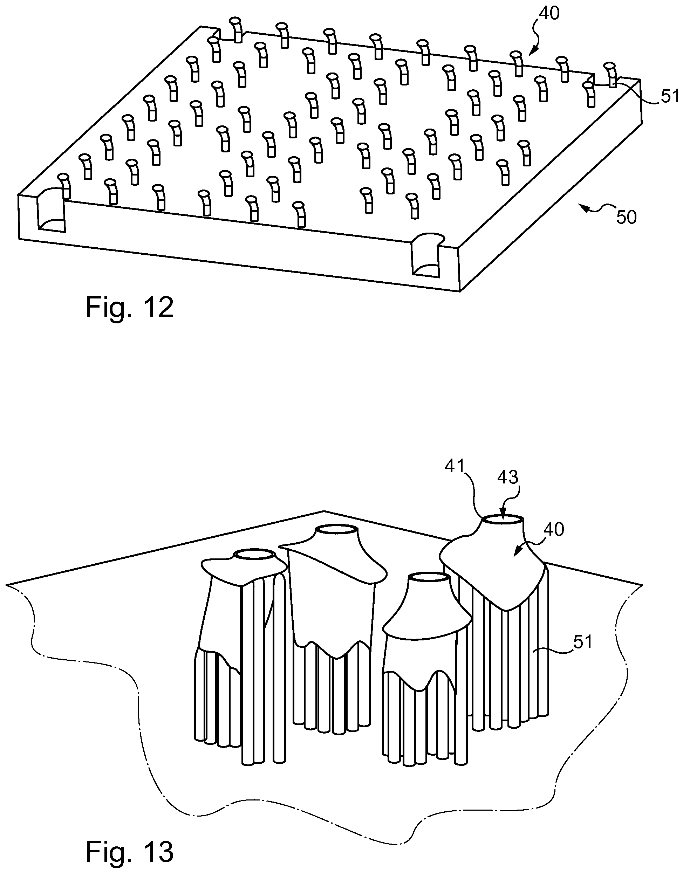

En particulier, le corps est réalisé par impression tridimensionnelle, au cas par cas. Cela étant, il est ainsi possible de réaliser simultanément plusieurs corps, comme le montre par exemple la figure 12.

Le corps est ensuite possiblement recouvert de céramique par électrophorèse ou par frittage au laser pour réaliser une couronne.

Le corps comporte une jonction corps-insert 43, qui est ici une jonction femelle configurée pour recevoir l'insert et en particulier la jonction mâle de l'insert.

La jonction corps-insert 43 consiste ici en un alésage de forme complémentaire à la forme de la jonction insert-corps, soit ici de la partie supérieure 32 de l'insert. En outre, l'alésage de la jonction corps-insert 43 est un trou borgne dans l'exemple de réalisation des figures 1 à 3 qui s'étend à partir d'une extrémité 41 du corps dite « extrémité proximale 41 ». L'extrémité proximale 41 est opposée à une extrémité 42 dite « extrémité apicale 42 »

Ainsi, dans ce mode de réalisation, la jonction corps-insert 43 a une forme conique tronquée, c'est-à-dire tronconique, avec une section au fond moindre qu'une section à l'extrémité 41. Elle présente de préférence un angle compris entre 4° et 12°.

En outre, un fond de l'alésage de la jonction corps-insert comporte au moins une cannelure 44 configurée pour coopérer avec la cannelure 36 de la jonction insert-corps de l'insert.

Dans le présent exemple de réalisation, le corps comporte extérieurement une partie cylindrique à section circulaire et un renflement situé entre la partie cylindrique et l'extrémité proximale 41. Toutefois, le corps peut présenter tout type de forme, comme ceci est décrit ultérieurement en lien avec la figure 13, dû au fait que les corps sont réalisés sur mesure au cas par cas en fonction de la morphologie de la dent à remplacer.

Le renflement situé ici entre la partie cylindrique et l'extrémité proximale 41 comporte ici une zone trans-gingivale du corps.

Il est préférable que la zone trans-gingivale soit usinée, éventuellement polie, pour présenter un état de surface permettant d'éviter des irritations d'une partie de la gencive en contact avec la prothèse.

Dans le mode de réalisation des figures 1 à 3, l'insert est donc d'abord assemblé à l'implant au moyen de la vis 11, la tête de vis étant maintenue dans le premier tronçon de l'alésage de l'insert et sa tige traversant le deuxième tronçon de l'alésage et étant vissée dans le filetage de l'implant, puis le corps est positionné et fixé sur l'insert par emmanchement.

Selon une option non représentée, le corps et l'insert peuvent en outre être liés entre eux par un procédé de fusion supplémentaire tel qu'une soudure sur leur face extérieure ou par coincement.

Une interface entre le corps et l'insert est ensuite possiblement retravaillée par un procédé de finition afin d'avoir une meilleure continuité de forme entre les deux. Il s'agit par exemple d'une étape de polissage.

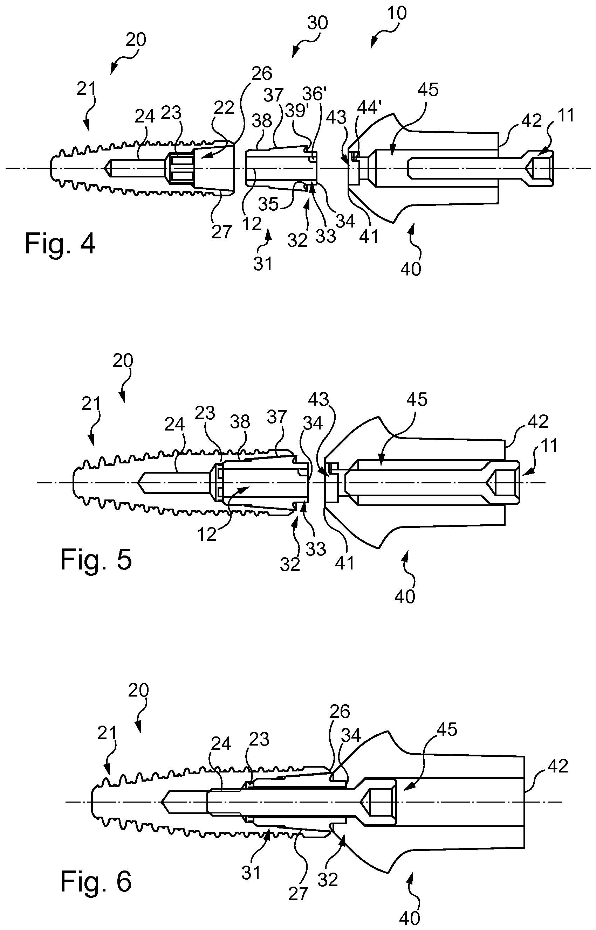

L'exemple de réalisation représenté sur les figures 4 à 6 diffère du mode de réalisation des figures 1 à 3 de par la partie supérieure 32 de l'insert d'une part et de par l'alésage de positionnement de la vis 11 dans le corps et l'insert d'autre part.

En effet, la partie supérieure 32 de l'insert est ici réduite, en longueur et en section. Elle comporte ici la jonction insert-corps qui a une forme cylindrique à section circulaire et comporte une cannelure 36', pour assurer le positionnement angulaire entre l'insert et le corps, formée dans l'alésage 12.

En outre, le rebord périphérique 39 précédent est ici une gorge 39' résultant d'une différence de section entre la jonction insert-corps et le premier tronçon 37. Ainsi, une fois le corps et l'insert assemblés, l'extrémité proximale 41 du corps est insérée dans la gorge 39' de l'insert.

Par ailleurs, ce mode de réalisation diffère également du mode de réalisation des figures 1 à 3 en ce que la jonction corps-insert 43 a une profondeur réduite, en concordance avec la jonction insert-corps. La jonction corps-insert 43 comporte en outre un doigt 44' en saillie depuis le fond de la jonction corps-insert 43 et configuré pour coopérer avec la cannelure 36' de la jonction insert-corps formée dans l'alésage 12.

Enfin, le corps comporte un alésage 45 qui le traverse de part en part. Par conséquent, l'alésage 45 débouche dans la jonction corps-insert. De même que l'alésage 12 de l'insert du précédent exemple de réalisation, l'alésage 45 du corps comporte une butée pour la tête de vis 11. En contrepartie ici, l'alésage 12 de l'insert a ici une section constante. Toutefois, l'alésage de l'insert peut alors présenter tout type de section puisqu'il est alors traversé seulement par la tige de la vis 11.

Ainsi, dans cet exemple de réalisation, le corps est positionné sur l'insert qui est positionné dans l'implant, et le corps, l'insert et l'implant sont assemblés par la vis 11, insérée dans le corps, qui traverse le corps et l'insert, la tête de la vis en appui sur la butée de l'alésage du corps et la tige de la vis vissée dans le filetage de l'implant.

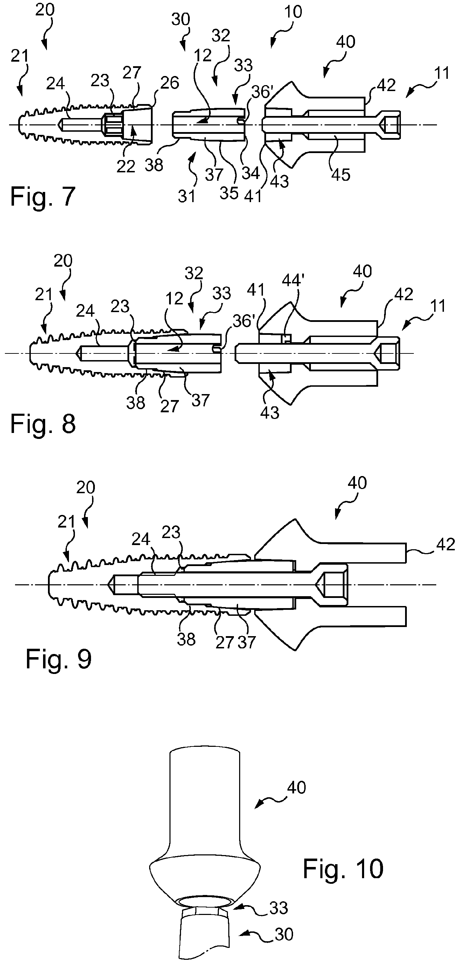

Dans le mode de réalisation des figures 7 à 9, l'insert diffère de celui du mode de réalisation des figure 4 à 6 au moins en ce que la partie supérieure 32 est ici formée par un cône Morse dont une section maximale est égale à une section maximale du premier tronçon 37. Il n'y a donc ici ni rebord périphérique 39 ni gorge 39' mais elles ne sont nullement incompatibles avec le présent mode de réalisation.

Parallèlement, le corps 40 diffère de précédent mode de réalisation en ce la jonction corps-insert a une forme tronconique en concordance avec la jonction insert-corps de la partie supérieure 32 formée par le cône Morse, à l'instar du mode de réalisation des figures 1 à 3.

Ainsi, dans cet exemple également, le corps est positionné sur l'insert qui est positionné dans l'implant, et le corps, l'insert et l'implant sont assemblés par la vis 11, insérée dans le corps, qui traverse le corps et l'insert, la tête de la vis en appui sur l'épaulement de l'alésage du corps et la tige de la vis vissée dans le filetage de l'implant.

La figure 10 présente en perspective un autre mode de réalisation d'indexation entre l'insert et le corps qui pourrait bien entendu être adapté sur chacun des modes de réalisation précités.

Dans cet exemple, la partie supérieure de l'insert comporte un tronçon à pans coupés, en particulier ici à section hexagonale.

Par conséquent, le fond de la jonction corps-insert du corps, qui est une jonction femelle, comporte une emprunte en concordance.

Ainsi, dans les précédents exemples de réalisation, le corps et l'insert sont assemblés par emmanchement, et éventuellement au moyen de cônes Morse.

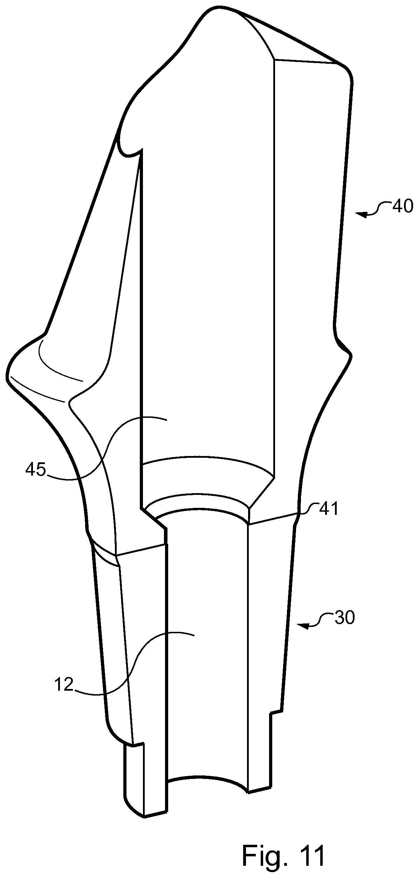

La figure 11 présente un autre mode de réalisation d'une jonction entre l'insert 30 et le corps 40 dans lequel la jonction insert-corps et la jonction corps-insert sont des plans. L'exemple de la figure 11 est ainsi réalisé sans emmanchement, par un contact plan-plan entre une surface inférieure du corps et une surface supérieure de l'insert. Un alignement entre le corps et l'insert se fait par exemple par un procédé consistant à adjoindre un simbleau de centrage en lieu et place d'une vis à travers un alésage 45 traversant le corps et à travers un alésage 12 traversant l'insert le temps du soudage.

Ce simbleau peut être constitué d'une matière, par exemple de la céramique, permettant, cas échéant, de contenir le bourrelet pénétrant de la soudure et d'éviter l'apparition d'un défaut dans ce secteur.

En revanche, de même que dans les exemples précédemment décrits, le corps comporte une zone trans-gingivale s'étendant à partir de la jonction corps-insert, qui est ici par exemple une surface plane en contact avec une surface plane formant la jonction insert-corps de l'insert.

Il est préférable que la zone trans-gingivale soit usinée, éventuellement polie, pour présenter un état de surface permettant d'éviter des irritations d'une partie de la gencive en contact avec la prothèse.

Les figures 12 et 13 présentent enfin un plateau 50 pour la réalisation simultanée de plusieurs corps par impression 3D.

Il est ainsi possible de produire simultanément plusieurs corps conçus sur-mesure, lors d'une seule production par fabrication additive. En effet, comme le montre plus particulièrement la figure 13, chaque corps a une forme qui lui est propre, déterminée en fonction de la dent à remplacer. Sur un même plateau, les corps peuvent donc être au choix tous identiques ou tous différents ou seuls certains d'entre eux peuvent former un groupe de corps identiques.

La fabrication des corps est effectuée en commençant par leur extrémité apicale 42. Il s'ensuit éventuellement un usinage des zones trans-gingivales et des jonctions corps-insert des corps afin d'obtenir des tolérances géométriques voulues pour pouvoir d'une part assembler les corps avec des inserts et d'autre part éviter une irritation de la gencive qui viendra en contact. Ceci est par exemple réalisé par un outil de type centre d'usinage 5 axes.

Le cas échéant, cette opération se fait dans l'état de la figure 12, à savoir sur le plateau de fabrication de la machine d'impression 3D.

Ainsi, afin de pouvoir réaliser l'usinage de la zone trans-gingivale et de la jonction corps-insert de chacun des corps pour lequel une telle étape doit avoir lieu, il est donc préférable que chacun des corps présente son extrémité proximale 41 orientée selon un axe d'approche de l'outil d'usinage, soit généralement vers le haut.

Pour cela, au moins l'extrémité apicale 42 de chaque corps est reliée au plateau via un support 51 qui assure non seulement la genèse durant l'impression 3D mais aussi le bridage des corps durant l'opération d'usinage de la jonction corps-insert 43.

Et en particulier, la fabrication des corps par impression tridimensionnelle comporte une première étape de synthèse d'un support 51, qui est ici formé de baguettes, et en particulier ici de baguettes en réseau. Cette étape de synthèse de support induit une soudure du support au plateau. Cette première étape est ensuite suivie d'une étape de synthèse d'un corps par impression tridimensionnelle, en commençant par son extrémité apicale. La synthèse du corps se fait donc dans un prolongement du support, en l'occurrence des baguettes.

Dans le cadre de la présente demande, le terme réseau signifie ici que les différents éléments formant le support, soit ici les baguettes, sont répartis sous le corps pour assurer son maintien.

Comme le montre plus particulièrement la figure 13, les baguettes sont réparties sous le corps de sorte à éviter tout défaut lié à des zones de contre-dépouille non soutenues. Dans cet exemple particulier de réalisation, des baguettes sont donc réparties à l'aplomb des zones de contre-dépouille. Un tel agencement d'éléments différents formant le support permet également de réaliser l'usinage après la synthèse du corps par impression 3D sur le même plateau en garantissant une meilleure tenue du corps par rapport au support de sorte à pouvoir y appliquer les efforts nécessaires à l'usinage.

Ultérieurement, le corps est ensuite détaché de son support. Un support sous forme de baguette est alors particulièrement commode pour réaliser un tel détachement. Mais de manière générale, tout type de support comportant une géométrie munie d'une amorce de rupture peut également convenir afin de favoriser la séparation par rupture entre le corps et son support. Ici par exemple, chaque baguette comporte optionnellement une section rétrécie à son extrémité en jonction avec l'extrémité apicale du corps pour favoriser son détachement par rapport au corps.

Une étape de polissage est ensuite éventuellement nécessaire.

Une difficulté résidait initialement en la coordination des différents éléments de fabrication des deux technologies, l'impression 3D et l'usinage. Cependant, il est apparu que cette difficulté pouvait être surmontée en prêtant une attention particulière aux réglages du procédé d'impression 3D et d'usinage.

Par la suite, une opération de soudage, destinée à s'assurer que les deux composants, corps et insert, sont correctement assemblés mécaniquement mais aussi à obturer un éventuel interstice entre eux, est possiblement effectuée si besoin.

Les éventuels défauts géométriques pouvant survenir pendant le soudage, sont amoindris voire ôtés lors d'une éventuelle phase finale de polissage d'au moins une soudure à l'interface entre l'insert et le corps.

## Revendications

1. Procédé de fabrication d'un pilier (10) implantaire de prothèse dentaire, un pilier (10) implantaire comportant un insert (30) en partie basse et un corps (40) en partie haute, le procédé comportant :
- Une étape de réalisation en série d'un insert (30) d'un pilier (10) implantaire comportant une sous-étape d'usinage dans une partie supérieure de l'insert (30) d'une jonction insert-corps (33) ; et
- Une étape de réalisation spécifique d'un corps (40) du pilier (10) implantaire, indépendant de l'insert (30), comportant une première sous-étape d'impression tridimensionnelle du corps (40) sur un plateau (50) d'impression tridimensionnelle et une deuxième sous-étape d'usinage d'une zone trans-gingivale du corps (40) et, dans une partie inférieure du corps, d'une jonction corps-insert (43), complémentaire de la jonction insert-corps (33), la deuxième sous-étape étant réalisée sur ledit plateau (50) d'impression tridimensionnelle.

2. Procédé selon la revendication 1, **caractérisé en ce qu'**il comporte une étape d'assemblage de l'insert (30) avec le corps (40), l'étape d'assemblage comportant une étape de soudage d'une interface entre l'insert (30) et le corps (40).

3. Procédé selon la revendication 2, **caractérisé en ce que** l'étape d'assemblage de l'insert (30) avec le corps (40) comporte une étape d'emmanchement de la jonction insert-corps (33) de l'insert (30) avec la jonction corps-insert (43) du corps.

4. Procédé selon l'une quelconque des revendications 1 à 3, **caractérisé en ce qu'**il comporte une étape d'alignement du corps (40) par rapport à l'insert (30), et **en ce que** l'alignement est réalisé par un simbleau traversant le corps (40) et l'insert (30).

5. Procédé selon l'une quelconque des revendications 1 à 4, **caractérisé en ce que** la première sous-étape de l'étape de réalisation spécifique d'un corps (40) du pilier (10) implantaire comporte une première étape de réalisation par impression tridimensionnelle d'un support (51) sous forme de baguettes en réseau, le corps (40) étant ensuite réalisé par impression tridimensionnelle dans un prolongement du support (51).

6. Procédé selon l'une quelconque des revendications 1 à 5, **caractérisé en ce que** la première sous-étape de l'étape de réalisation spécifique d'un corps (40) du pilier (10) implantaire comporte une étape finale de formation par impression tridimensionnelle de la jonction corps-insert (43).

7. Procédé selon l'une quelconque des revendications 1 à 6, **caractérisé en ce qu'**il comporte plusieurs étapes de réalisation spécifique d'un corps (40) du pilier (10) implantaire simultanées configurées pour réaliser une pluralité de corps (40) par impression tridimensionnelle sur le même plateau (50) d'impression tridimensionnelle.

8. Procédé de fabrication d'une prothèse dentaire comportant une étape de fabrication d'un pilier (10) implantaire de la prothèse dentaire par un procédé selon l'une quelconque des revendications 1 à 7 et comportant une étape d'assemblage de l'insert (30) avec un implant dentaire (20), et en ce que l'étape d'assemblage de l'insert (30) avec un implant dentaire (20) comporte une étape de fixation d'au moins l'insert (30) à l'implant dentaire (20) avec une vis.

9. Prothèse dentaire, obtenue par un procédé selon la revendication 8, comportant un pilier (10) implantaire et un implant (20), le pilier (10) implantaire comportant un insert (30), configuré pour raccorder le pilier (10) à l'implant (20), fabriqué en série, et un corps (40), configuré pour raccorder le pilier (10) à une couronne, le corps étant fabriqué spécifiquement par impression tridimensionnelle indépendamment de l'insert (30) ; l'insert comportant une partie supérieure pourvue d'une jonction insert-corps (33) et le corps comportant une zone trans-gingivale et une partie inférieure pourvue d'une jonction corps-insert (43), coopérant avec la jonction insert-corps (33), le pilier (10) comportant en outre une soudure à une interface entre le corps (40) et l'insert (30), et la prothèse comportant une vis fixant au moins l'insert à l'implant (20).

10. Prothèse selon la revendication 9, **caractérisée en ce que** le pilier (10) comporte un système d'indexation de l'insert (30) par rapport au corps (40).

## Patentansprüche

1. Verfahren zum Herstellen eines Implantat-Abutments (10) für Zahnprothesen, wobei ein Implantat-Abutment (10) einen Einsatz (30) im unteren Teil und einen Körper (40) im oberen Teil aufweist, wobei das Verfahren umfasst:
- einen Schritt der Serienherstellung von einem Einsatz (30) eines Implantat-Abutments (10), umfassend einen Unterschritt des Einarbeitens einer Einsatz-Körper-Verbindung (33) in einen oberen Teil des Einsatzes (30); und
- einen spezifischen Schritt des Ausbildens von einem Körper (40) des Implantat-Abutments (10), der von dem Einsatz (30) unabhängig ist, umfassend einen ersten Unterschritt des 3D-Druckens von dem Körper (40) auf eine 3D-Druck-Platte (50) und einen zweiten Unterschritt des Bearbeitens von einem transgingivalen Bereich des Körpers (40) und einer Körper-Einsatz-Verbindung (43) in einem unteren Teil des Körpers, die komplementär zu der Einsatz-Körper-Verbindung (33) ist, wobei der zweite Unterschritt an der 3D-Druck-Platte (50) erfolgt.

2. Verfahren nach Anspruch 1, **dadurch gekennzeichnet, dass** es einen Schritt des Zusammenfügens von dem Einsatz (30) mit dem Körper (40) umfasst, wobei der Schritt des Zusammenfügens einen Schritt des Verschweißens von einer Grenzfläche zwischen Einsatz (30) und Körper (40) umfasst.

3. Verfahren nach Anspruch 2, **dadurch gekennzeichnet, dass** der Schritt des Zusammenfügens von dem Einsatz (30) mit dem Körper (40) einen Schritt des Zusammensteckens von der Einsatz-Körper-Verbindung (33) des Einsatzes (30) mit der Körper-Einsatz-Verbindung (43) des Körpers umfasst.

4. Verfahren nach einem der Ansprüche 1 bis 3, **dadurch gekennzeichnet, dass** es einen Schritt des Ausrichtens von dem Körper (40) bezüglich des Einsatzes (30) umfasst, und dass das Ausrichten mit einem Zentrierstück erfolgt, das den Körper (40) und den Einsatz (30) durchsetzt.

5. Verfahren nach einem der Ansprüche 1 bis 4, **dadurch gekennzeichnet, dass** der erste Unterschritt des Schritts der spezifischen Ausbildung von einem Körper (40) des Implantat-Abutments (10) einen ersten Schritt des Ausbildens von einem Träger (51) in Form von Gitterstäben durch 3D-Druck umfasst, wobei der Körper (40) dann durch 3D-Druck in einer Verlängerung des Trägers (51) ausgebildet wird.

6. Verfahren nach einem der Ansprüche 1 bis 5, **dadurch gekennzeichnet, dass** der erste Unterschritt des Schritts der spezifischen Ausbildung von einem Körper (40) des Implantat-Abutments (10) einen Endschritt des Bildens der Körper-Einsatz-Verbindung (43) durch 3D-Druck umfasst.

7. Verfahren nach einem der Ansprüche 1 bis 6, **dadurch gekennzeichnet, dass** es mehrere gleichzeitig erfolgende Schritte der spezifischen Ausbildung von einem Körper (40) des Implantat-Abutments (10) umfasst, die dazu ausgelegt sind, eine Mehrzahl von Körpern (40) durch 3D-Druck auf derselben 3D-Druckplatte (50) auszubilden.

8. Verfahren zum Herstellen einer Zahnprothese mit einem Schritt des Herstellens von einem Implantat-Abutment (10) der Zahnprothese durch ein Verfahren nach einem der Ansprüche 1 bis 7, umfassend einen Schritt des Zusammenfügens von dem Einsatz (30) mit einem Zahnimplantat (20), wobei der Schritt des Zusammenfügens von dem Einsatz (30) mit einem Zahnimplantat (20) einen Schritt des Befestigens von zumindest einem Einsatz (30) an das Zahnimplantat (20) mit einer Schraube umfasst.

9. Zahnprothese, erhalten durch eine Verfahren nach Anspruch 8, umfassend ein Implantat-Abutment (10) und ein Implantat (20), wobei das Implantat-Abutment (10) einen Einsatz (30) aufweist, der dazu ausgelegt ist, das Abutment (10) mit dem Implantat (20) zu verbinden, das in Serie hergestellt wird, sowie einen Körper (40), der dazu ausgelegt ist, das Abutment (10) mit einer Krone zu verbinden, wobei der Körper spezifisch durch 3D-Druck unabhängig von dem Einsatz (30) hergestellt wird; wobei der Einsatz einen oberen Teil aufweist, der mit einer Einsatz-Körper-Verbindung (33) versehen ist, und wobei der Körper einen transgingivalen Bereich und einen unteren Teil aufweist, der mit einer Körper-Einsatz-Verbindung (43) versehen ist, die mit der Einsatz-Körper-Verbindung (33) zusammenwirkt, wobei das Abutment (10) ferner eine Schweißnaht an einer Grenzfläche zwischen dem Körper (40) und dem Einsatz (30) aufweist, und wobei die Prothese eine Schraube enthält, die zumindest den Einsatz an dem Implantat (20) befestigt.

10. Prothese nach Anspruch 9, **dadurch gekennzeichnet, dass** das Abutment (10) ein System zum Indexieren des Einsatzes (30) bezüglich des Körpers (40) enthält.

## Claims

1. Method for making a dental prothesis implant abutment (10), an implant abutment (10) comprising an insert (30) at the bottom and a housing (40) at the top, the method comprising:
- a step of mass producing an insert (30) of an implant abutment (10), comprising a substep of machining an insert-housing joint (33) into an upper part of the insert (30); and
- a step of individually producing a housing (40) of the implant abutment (10), independently of the insert (30), comprising a first substep of 3D printing the housing (40) on a 3D printing plate (50), and a second substep of machining a transgingival region of the housing (40) and, into a lower part of the housing, a housing-insert joint (43) which is complementary to the insert-housing joint (33), the second substep being carried out on said 3D printing plate (50).

2. Method according to claim 1, **characterised in that** it comprises a step of joining the insert (30) to the housing (40), the joining step comprising a step of soldering an interface between the insert (30) and the housing (40).

3. Method according to claim 2, **characterised in that** the step of joining the insert (30) to the housing (40) comprises a step of establishing a press fit between the insert-housing joint (33) of the insert (30) and the housing-insert joint (43) of the housing.

4. Method according to any of claims 1 to 3, **characterised in that** it comprises a step of aligning the housing (40) relative to the insert (30), and **in that** the alignment is carried out by a centring bridge across the housing (40) and the insert (30).

5. Method according to any of claims 1 to 4, **characterised in that** the first substep of the step of individually producing a housing (40) of the implant abutment (10) comprises a first step of producing a support (51) in the form of an array of rods by means of 3D printing, the housing (40) then being produced as an extension of the support (51) by means of 3D printing.

6. Method according to any of claims 1 to 5, **characterised in that** the first substep of the step of individually producing a housing (40) of the implant abutment (10) comprises a final step of forming the housing-insert joint (43) by means of 3D printing.

7. Method according to any of claims 1 to 6, **characterised in that** it comprises a plurality of simultaneous steps of individually producing a housing (40) of the implant abutment (10) designed to produce a plurality of housings (40) by means of 3D printing on the same 3D printing plate (50).

8. Method for making a dental prosthesis, comprising a step of making an implant abutment (10) of the dental prosthesis by means of a method according to any of claims 1 to 7, and comprising a step of joining the insert (30) to a dental implant (20), and in that the step of joining the insert (30) to a dental implant (20) comprises a step of securing at least the insert (30) to the dental implant (20) by means of a screw.

9. Dental prosthesis obtained by means of a method according to claim 8, comprising an implant abutment (10) and an implant (20), the implant abutment (10) comprising a mass-produced insert (30), which is designed to connect the abutment (10) to the implant (20), and a housing (40), which is designed to connect the abutment (10) to a crown, the housing being made individually by means of 3D printing, independently of the insert (30), the insert comprising an upper part provided with an insert-housing joint (33) and the housing comprising a transgingival region and a lower part provided with a housing-insert joint (43) which engages with the insert-housing joint (33), the abutment (10) further comprising a soldered joint at an interface between the housing (40) and the insert (30), and the prosthesis comprising a screw which secures at least the insert to the implant (20).

10. Prosthesis according to claim 9, **characterised in that** the abutment (10) comprises a system for indexing the insert (30) relative to the housing (40).
